# EUROPEAN PATENT APPLICATION

(11) **EP 4 779 588 A1**
(43) Date of publication of application: **22.07.2026**
(21) Application number: 25152926.9
(22) Date of filing: 20.01.2025
(51) Int. Cl.: G06V 20/52

(54) **DEVICE AND METHOD FOR DETECTING AN OBJECT HAVING AN ANOMALOUS CONFIGURA-TION IN AN ENVIRONMENT OF A ROBOT DEVICE**

(71) Applicant: Robert Bosch GmbH, 70442 Stuttgart (DE)
(72) Inventor: Somfai, Ellák, 1122 Budapest (HU); Fischl, Tamas, 2462 Martonvásár (HU); Tugyi, Beatrix, 1196 Budapest (HU)

(57) **Abstract**

According to various embodiments, a method for detecting an anomalous configuration of an object (113, 115) in an environment of a robot device (101) is provided, comprising, for each image (202) showing one or more objects (113, 115), generating a representation of the image (202) from a feature set generated by a feature extractor (204, 205) of an object detector (203) applied to the image (202), determining clusters (312, 313) by clustering the representations, taking a further image (202) showing the environment of the robot device (101), generating a representation of the further image (202) from a further feature set generated by the feature extractor (204, 205) of the object detector (203) applied to the further image (202) and determining that the environment holds an object (113, 115) with an anomalous configuration in reaction to the representation of the further image (202) not belonging to any one of the determined representation clusters (312, 313) and in reaction to the representation of the further image (202) belonging to a representation cluster (313) which holds representations of images (202) known to shown objects (113, 115) with anomalous configurations.

## Description

The present disclosure relates to devices and methods for detecting an object having an anomalous configuration in an environment of a robot device.

Most industrial automation realizations require some kind of computer vision tool to map the working area and identify what kinds of components are available. These are necessary for the system (e.g. an industrial robot) to get information about its surroundings and to be able to determine what the next action should be. Since such systems are typically not closed systems which can explicitly predict what will be in front of the lens, it is important to have some sort of mechanism that is prepared for unusual cases as well. Especially when an autonomous system is used in a hazardous environment. For example, when a machine is transporting or cutting things, it is essential that it can determine whether a human is in the way, or whether clothes are hanging inside the work area, which could lead to accidents. In such situations, it is critical that autonomous systems do not continue to operate as normal, but give some kind of signal and/or enter a safe state, as the resolution of the action requires human intervention. Accordingly, approaches for detecting objects in an anomalous configuration in the workspace (or generally the environment) of a robot device are desirable.

According to various embodiments, a method for detecting an anomalous configuration of an object in an environment of a robot device is provided, comprising
- for each image showing one or more objects, generating a representation of the image from a feature set generated by a feature extractor of an object detector applied to the image
- determining representation clusters by clustering the representations
- taking a further image showing the environment of the robot device
- generating a representation of the further image from a further feature set generated by the feature extractor of the object detector applied to the further image and
- determining that the environment holds an object with an anomalous configuration in reaction to the representation of the further image not belonging to any one of the determined representation clusters and in reaction to the representation of the further image belonging to a representation cluster which holds representations of images known to shown objects with anomalous configurations.

The method described above allows an efficient and reliable anomaly detection by using an object detector's feature extractor to obtain features for anomaly detection.

In the following, various examples are given.

Example 1 is a method for detecting an anomalous configuration of an object in an environment of a robot device as described above.

Example 2 is the method of example 1, wherein the feature set and the further feature set each comprise multiple features for multiple resolutions and generating the representation of the image comprises concatenating the multiple features of the feature set and generating the representation of the further image comprises concatenating the multiple features of the further feature set.

Typically, object detector models operate on multiple resolutions to be able to capture objects that are shown with different sizes. Including the features in the representation for all these resolutions makes the anomaly detection more reliable.

Example 3 is the method of example 1 or 2, wherein generating the representation of the image comprises normalizing (e.g. all) feature values of the feature set and generating the representation of the further image comprises normalizing (e.g. all) feature values of the further feature set.

This ensures that each feature contributes equally to the representation and further representation, respectively.

Example 4 is the method of any one of examples 1 to 3, comprising reducing the dimensionality of feature values (e.g. the normalized feature values) of the feature set and (equally) reducing the dimensionality of feature values of the further feature set.

Reducing the dimensionality allows more efficient clustering.

Example 5 is the method of any one of examples 1 to 4, further comprising detecting one or more objects in the environment of the robot device from the further feature set and controlling the robot device depending on the one or more objects.

Thus, the feature set is used for two purposes: anomaly detection as well as object detection.

Example 6 is a method for controlling a robot device comprising detecting an anomalous configuration of an object in an environment of the robot device according to any one of example 1 to 4 and controlling the robot device depending on whether it was determined that the environment holds an object with an anomalous configuration.

For example, the robot device is controlled to enter a safe state (e.g. to stop moving) in case it was it was determined that the environment holds an object with an anomalous configuration.

Example 7 is the method of example 6, further comprising detecting one or more objects in the environment of the robot device from the further feature set and controlling the robot device depending on the one or more objects.

Example 8 is the method of example 7, comprising controlling the robot device to handle at least some of the one or more objects in reaction to determining that the environment does not hold an object with an anomalous configuration.

Example 9 is a data processing system, configured to perform a method of any one of examples 1 to 8.

Example 10 is a computer program comprising instructions which, when executed by a computer, makes the computer perform a method according to any one of examples 1 to 8.

Example 11 is a computer-readable medium comprising instructions which, when executed by a computer, makes the computer perform a method according to any one of examples 1 to 8.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a robot.
- Figure 2: illustrates an anomaly detection according to an embodiment.
- Figure 3: illustrates an anomaly detection based on features extracted by a feature extractor of an object detector.
- Figure 4: shows a flow diagram illustrating a method for detecting an anomalous configuration of an object in an environment of a robot device.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

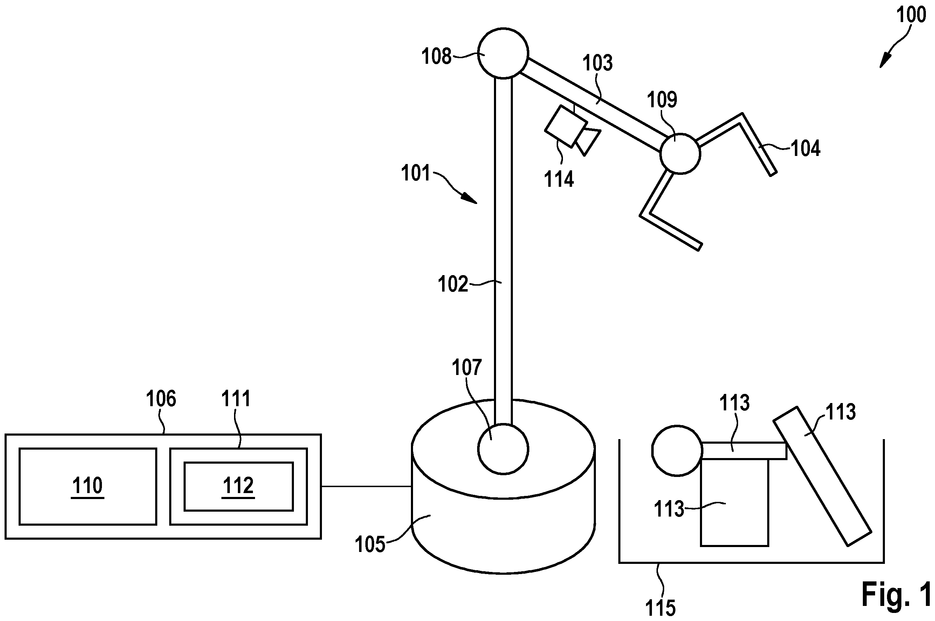

Figure 1 shows a robot 100.

The robot 100 includes a robot arm 101, for example an industrial robot arm for handling or assembling a work piece (or one or more other objects). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and may include one or more tools such as a welding torch, gripping instrument, painting equipment, or the like.

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions to a human arm (possibly with a tool at its end).

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data according to which the processor 110 controls the robot arm 101. According to various embodiments, the controller 106 controls the robot arm 101 on the basis of a machine learning model 112 stored in the memory 111.

In particular, the machine learning model 112 may be or include an object detector which allows the controller 106 to identify objects 113, 115, e.g. a box 115 and items 113 in the box 115 located in the robot's workspace using images of the workspace by one or more cameras 114.

Besides identifying objects, it is desirable that the controller 106 detects anomalies. For example, it should be able to detect that the robot is facing a situation, e.g. an object 113, 115 in its workspace, which is not supposed to be handled because it is faulty, damaged, wrong or unknown. Using image-based anomaly detection, the controller 106 can detect such situations (and such objects) using the images provided by the one or more cameras. For example, according to various embodiments, a deep learning based anomaly detection is integrated into the robot's workflow.

An example of a robot 100 is an unpacking machine which unpacks boxes received on a conveyor belt, separates their contents and sorts the leftover packaging materials selectively. It can move and lift different items, sort them, and has for example a cutting blade to cut the boxes open at their localized coordinates. This robot can observe what is in front of its camera(s) 114 and locate each product with object detection techniques, and then it can decide what to do next.

In that example, the machine learning model 112 is configured and trained to recognize goods (e.g., PCBs and Reels), plastic packaging and paper packaging, due to recycling. For this, an object detector may be used but in a real environment, the machine also has to be prepared for the edge cases when some unexpected input or anomaly is encountered. Namely, relying only on an object detection model, all items would be categorized into one of a set of predefined classes and the robot would try to handle an item which it identifies to be of a certain class in the same way as any other item from that class. However, in a real environment, there is a risk that an item is defective, damaged or differently packaged and should therefore be handled somehow differently. Handing such an item only according to the identified class could damage or ruin the item and even cause the robot (or even a larger system) to shut down. To prevent such errors, an anomaly detection is integrated into the workflow (e.g. before a movement of the robot arm is started). This provide a safety enhancement to prevent accidents by detecting faulty items.

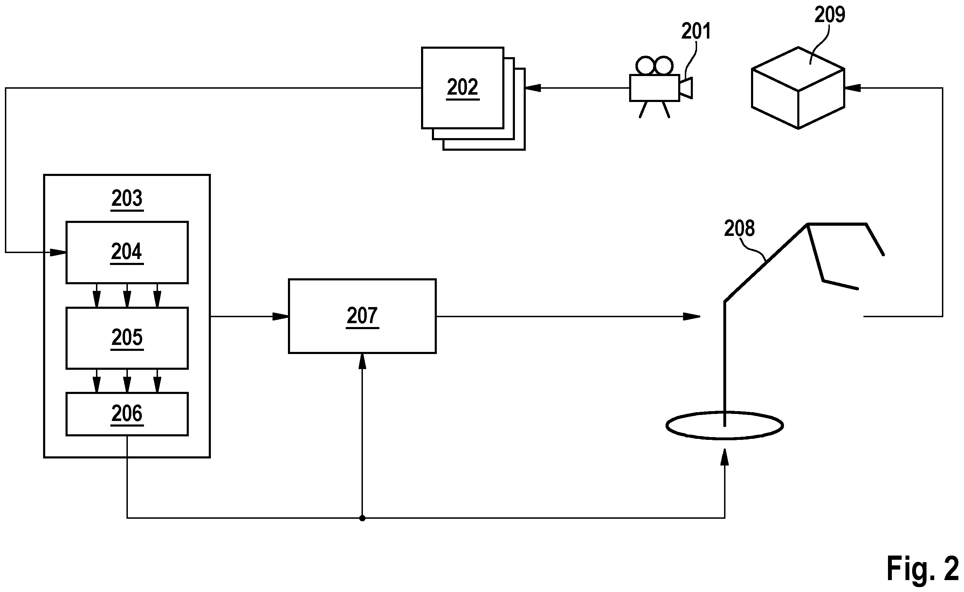

So, according to various embodiments, approaches for anomaly detection are provided which can be incorporated into a robotic system to detect edge cases (anomalies), as it is illustrated in figure 2.

Figure 2 illustrates an anomaly detection according to an embodiment.

A camera 201, e.g. corresponding to the one or more cameras 114, provides images 202 of the workspace of a robot 208 having a robot arm (as described with reference to figure 1). The workspace includes a box 209 which may be closed, open and including items to be unpacked or empty. The robot's controller (e.g. corresponding to the controller 106) implements (e.g. as the machine learning model 112 or part of it) an object detector 203 comprising a backbone 204, a neck 205 and a head 206 as sub-models. The object detector 203 outputs information about objects in the robot's workspace, e.g. about boxes holding goods and about the goods, such as box coordinates and types and locations of the goods. Further, the robot's controller implements an anomaly detector 207. If the anomaly detector 207 detects an anomaly regarding the configuration of an object, e.g. a good that is wrapped in an unknown packaging, it initiates an error handling, e.g. stops movement of the robot arm and/or brings it into a safe pose and alerts a human operator. The controller for example decides whether goods are in a box in its workspace and, in case the anomaly detector 207 does not detect an anomaly, controls the robot arm to unpack the top item.

In case the controller determines (from the object detector output) that an empty box is in the robot's workspace it controls the robot arm (or a conveyor belt) to move to another box and if it determines that a closed box is in the robot's workspace it controls the robot arm to open the box. Thus, the unpackaging process runs in a loop and stops when it has encountered an anomaly.

Given that, as illustrated in figure 2, the anomaly detection is performed after the object detection, it can be assumed that the output information of it is available and can be used as a prior knowledge for anomaly detection. In the above use case, this is the information about the types and locations of the products inside the boxes. The target objects for unpacking are always inside a box, which coordinates are successfully localized, so the anomaly detection can also focus exclusively on the inside of the boxes.

The images 202 may for example only show the opened boxes (and there is only a negligible amount of background information in the images 202) so no further cropping is needed as pre-processing. In case the images 202 (e.g. taken in a factory) contain a larger part of the working space (possibly even multiple boxes at a time), the box that the anomaly detector 207 should focus on is cropped out before the anomaly detection. In this case the same object detection model (i.e. object detector) 203 is for example used twice: first, for the detection of the open box coordinates (Alternatively, here a simpler object detection model is enough, which can only detect the open box coordinates). Then the respective image 202 is cropped to the open box part and on this cropped image the object detector 203 is applied once more and from this the output is the exact product types inside the box, and its latent representation is used for anomaly detection by the anomaly detector 207.

The information about the state of the box is also available from the object detector output. The anomaly detection is for example only performed if a box is open and not empty. If it is empty, the robot can move on to the next box and if it is closed, the robot can open it with the help of the localized coordinates of the box provided by the object detector.

According to various embodiments, the anomaly detector 207 uses features extracted from the images 202 by the object detector 203 (e.g. YOLO model), i.e. a feature extractor of the object detector 203 (i.e. a part of the object detector 203 extracting features, e.g. backbone 204 followed by neck 205) are used as feature extractor for providing features to the anomaly detector 207. This makes the anomaly detection very efficient since the object detector 203 is typically present in any case to allow the robot to find objects in its workspace. Also, a successful object detection demonstrates that the object detector, and thus its feature extractor, successfully discovers and distinguishes the main characteristics of each object.

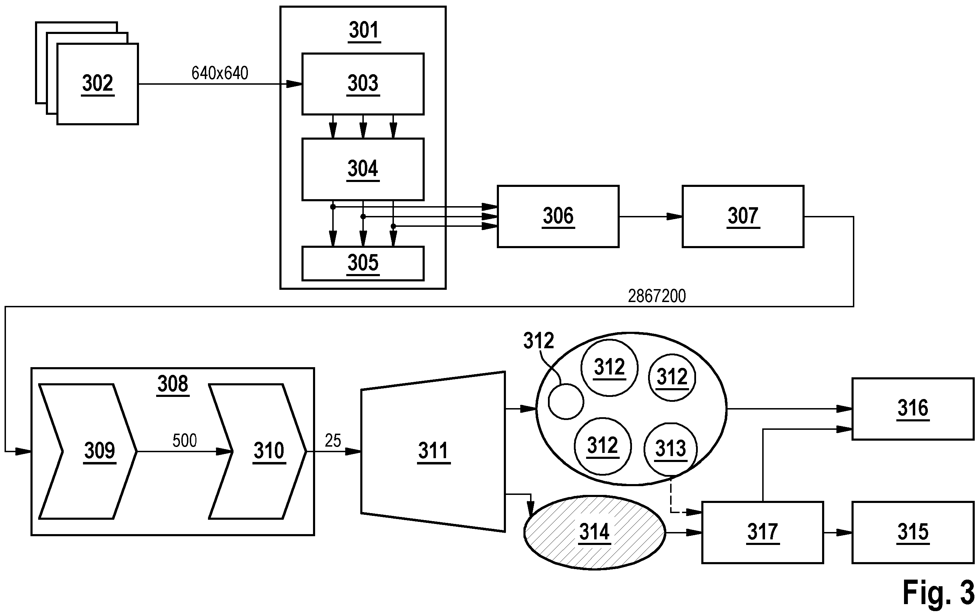

Figure 3 illustrates an anomaly detection based on features extracted by a feature extractor (typically a (convolutional) neural network) of an object detector 301.

As described with reference to figure 2, the object detector 301 (corresponding to the object detector 301) receives images 302 based on which it performs object detection. This includes extracting features by first processing the images by a backbone 303 followed by a neck 304. The features provided by the neck 304, here represented by three arrows going from the neck 304 to a head 305 of the object detector, are used by the head 305 for object detection. Further, the features are used by an anomaly detector (corresponding to anomaly detector 207). The processing performed by the anomaly detector is described in the following.

The output of the feature extractor of the object detector 301, i.e. the output of the neck 304, is assumed to output features of different resolutions, i.e. a set of features for each of multiple resolutions (e.g. a feature map for each resolution), in this example three resolutions (as represented by the three arrows). These features are aggregated by concatenating them in 306 (i.e. the features determined for the three resolutions are put together, e.g. to one array of feature values).

In 307, the features are then normalized. It is useful to scale (i.e. normalize) the features extracted by object detector's feature extractor to ensure that each feature contributes equally to the representation of the image content, especially in distance-based algorithms. A scaling method is used that does not suppress any outlying features, as these may indicate anomalies, and are therefore worth keeping for anomaly detection. Examples are MinMax scaling, standard scaling (i.e. to have mean zero and standard deviation 1) and robust scaling (i.e. scaling based on quantiles). Of these robust scaling maintains a good balance by scaling the features based on the majority of the features without letting the anomalies influence the scaling too much. The scaling may be done over all values or component-wise in case the features are a set of feature vectors.

Since the feature extractor may output a large number of values (scalar values as well as vectors including multiple scalar values) the representation of the image as set of feature values may have a high dimension (i.e. may include a high number of scalar values). Since a clustering is to be applied and clustering methods typically only work on relatively small dimensional data, a dimensional reduction is applied in 308. According to one embodiment, the dimension reduction includes application of a principal component analysis (PCA) 309 followed by UMAP (Uniform Manifold Approximation and Projection) 310 to training examples and reducing the present set of features accordingly (i.e. project it to principle components determined from the application of the PCA to the training examples and similarly project the results for a present representation (i.e. determined from an image of a present state of the robot's workspace) to the principal components and the structure (graph) determined by the application of the UMAP to the training examples).

By combining the PCA 309 and the UMAP 310, PCA first reduces dimensionality while preserving global linear structure, removing noise and simplifying the data, then UMAP further reduces dimensions while capturing both local and global nonlinear relationships. Together, they can create a low-dimensional, denoised, and well-structured representation.

For example, the output of the normalization 307 includes (20x20x1024) + (512x40x40) + (256x80x80) = 2867200 values (wherein the three terms that are added correspond to the features of the three resolutions. By the dimensionality reduction 308, the number of values is reduced to 500 (by the PCA 309) and then further 25 (by the UMAP 310) leading to a much smaller (dimensionality-reduced) representation of each image 302 (which may be a training example or a present image, i.e. an image showing a present situation in which the robot should be controlled).

In the training, the (dimensionality-reduced) representations of the training examples are clustered in a clustering 311 to determine representation clusters (i.e. clusters of representations) 312, 313.

Examples for clustering algorithms that may be used are DBSCAN (Density-Based Spatial Clustering of Applications with Noise) and HDBSCAN (Hierarchical Density-Based Spatial Clustering of Applications with Noise).

For a present (dimensionality-reduced) representation, it is checked whether it is an outlier 314 (e.g. has a certain minimum distance to each cluster) or whether it belongs to an "anomalous" cluster 313, i.e. a cluster of the clusters 312, 313 including representations corresponding (i.e. representing) trainings examples which are known to be anomalies. In both of these cases, the present representation is considered to correspond to an anomaly 315 (i.e. representations of trainings examples that are known to include anomalies may also be clustered; those clusters are marked accordingly as containing anomalies). Otherwise, it is considered as a normal representation 316, i.e. the present image is considered to not include an anomaly.

Whether a present representation belongs to a certain cluster (otherwise it is considered to be an outlier) may be determined according to the clustering algorithm that is used.

The identification of outliers with DBSCAN or HDBSCAN is based on metrics, (e.g., Euclidean distance) to measure the closeness between points (which are the latent space representations). In DBSCAN there is a specific threshold (called ε), and it marks points as outliers if they do not have enough neighbours within distance ε. This threshold ε can be set as a parameter of the algorithm. In HDBSCAN, this works in a more complex way, because instead of a single fixed threshold ε, HDBSCAN builds on a hierarchy of clusters by varying a density threshold dynamically and the final clusters can be based on different thresholds depending on the structure of the data.

The anomaly detector may include a filter 317 to filter out false positives (i.e. filter out falsely detected anomalies). This may be desirable since, while the number of false positives can usually be minimized by optimally adjusting the parameters of the clustering algorithm, the success of clustering is influenced by the given dataset and anomaly types and it cannot therefore be guaranteed that it will always be so successful and there could be a case where the number of these false positives is too high. In this case, as filtering, a simpler anomaly detection method may be run on the images (such as one based on an autoencoder where images with reconstruction error over a threshold are considered as anomalies) that were marked as anomalies by the anomaly detector 207 and filtering out those images which have a negligible probability of being an anomaly according to the simpler anomaly detection method. The filter is therefore optional and for example only used if after an extensive parameter optimalization the clustering result from the training data still shows too many false positives.

For the above use case, the training examples for training the anomaly detector 207 (in particular to define the clusters 312, 313 and to learn the principal components and the UMAP structure) are for example a series of training images about the process of manual box placement, opening and unpacking. Since the anomaly detection focuses on open boxes, training examples are for example used that only show open box parts (e.g. cropped from larger images). The training images show for example goods like reels and PCBs but possibly also various kinds of paper or plastic packaging material, bubble wrap, strips and labels on the boxes.

The training examples are divided into two groups (and e.g. accordingly labelled): normal data and anomalies. Since, for example, on a paper package, tearing or creasing is considered normal, but on a box, such occurrences are abnormal, the training examples may be grouped according to the type of object for the labelling. Since the object type is available from the object detector 203, the anomaly detector 207 can take the object type into account. So, for example, a separate dataset may be provided for each of multiple object type to have an object-type dependent anomaly detection.

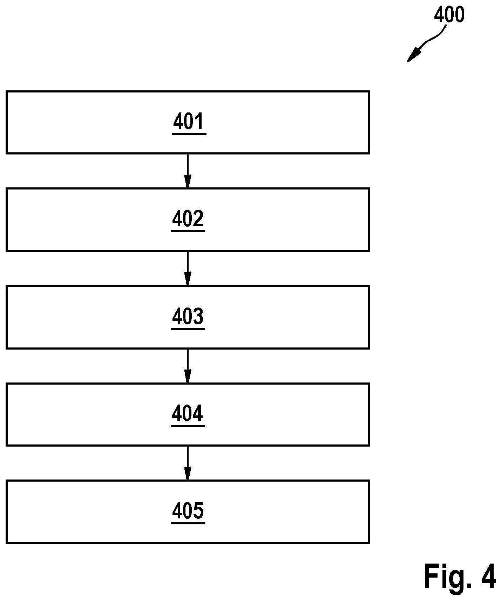

In summary, according to various embodiments, a method is provided as illustrated in figure 4.

Figure 4 shows a flow diagram 400 illustrating a method for detecting an anomalous configuration of an object (e.g. packed in a strange manner, damaged packaging of the object, damaged component of the object etc.) in an environment of a robot device (e.g. a workspace of a robot arm).

In 401, for each image showing one or more objects, a (latent) representation of the image is generated from a feature set generated by a feature extractor of an object detector applied to the image.

In 402, representation clusters are determined by clustering the (latent) representations (i.e. the images are clustered based on the representations, or, in other words, the representations are clustered by applying a clustering algorithm; since each representation is the representation of an image, this is equivalent to clustering the images).

In 403, a further image showing the environment of the robot is taken.

In 404, a (latent) representation of the further image is generated from a further feature set generated by the feature extractor of the object detector applied to the further image (i.e. in the same manner as the representations of the image).

In 405, it is determined that the environment holds an object with an anomalous configuration in reaction to the representation of the further image not belonging to any one of the determined representation clusters and in reaction to the representation of the further image belonging to a representation cluster which holds representations of images known to shown objects with anomalous configurations.

The approach of figure 4 can be used to compute a control signal for controlling a technical system, in particular a robot device, like e.g. a computer-controlled machine, like a robot, a vehicle, a domestic appliance, a power tool, a manufacturing machine, a personal assistant or an access control system. According to various embodiments, a policy for controlling the technical system may be learnt and then the technical system may be operated accordingly.

Various embodiments may receive and use image data (i.e. digital images) from various visual sensors (cameras) such as video, radar, LiDAR, ultrasonic, thermal imaging, motion, sonar etc..

The method of Figure 4 may be performed by a data processing system including one or more data processing devices (e.g. computers or controllers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for detecting an anomalous configuration of an object (113, 115) in an environment of a robot device (101), comprising:
For each image (202) showing one or more objects (113, 115), generating a representation of the image (202) from a feature set generated by a feature extractor (204, 205) of an object detector (203) applied to the image (202);
Determining clusters (312, 313) by clustering the representations;
Taking a further image (202) showing the environment of the robot device (101);
Generating a representation of the further image (202) from a further feature set generated by the feature extractor (204, 205) of the object detector (203) applied to the further image (202);
Determining that the environment holds an object (113, 115) with an anomalous configuration in reaction to the representation of the further image (202) not belonging to any one of the determined representation clusters (312, 313) and in reaction to the representation of the further image (202) belonging to a representation cluster (313) which holds representations of images (202) known to shown objects (113, 115) with anomalous configurations.

2. The method of claim 1, wherein the feature set and the further feature set each comprise multiple features for multiple resolutions and generating the representation of the image (202) comprises concatenating the multiple features of the feature set and generating the representation of the further image (202) comprises concatenating the multiple features of the further feature set.

3. The method of claim 1 or 2, wherein generating the representation of the image (202) comprises normalizing feature values of the feature set and generating the representation of the further image (202) comprises normalizing feature values of the further feature set.

4. The method of any one of claims 1 to 3, comprising reducing the dimensionality of feature values of the feature set and reducing the dimensionality of feature values of the further feature set.

5. The method of any one of claims 1 to 4, further comprising detecting one or more objects (113, 115) in the environment of the robot device (101) from the further feature set and controlling the robot device (101) depending on the one or more objects (113, 115).

6. A method for controlling a robot device (101) comprising detecting an anomalous configuration of an object (113, 115) in an environment of the robot device (101) according to any one of claims 1 to 4 and controlling the robot device (101) depending on whether it was determined that the environment holds an object (113, 115) with an anomalous configuration.

7. The method of claim 6, further comprising detecting one or more objects (113, 115) in the environment of the robot device (101) from the further feature set and controlling the robot device (101) depending on the one or more objects (113, 115).

8. The method of claim 7, comprising controlling the robot device (101) to handle at least some of the one or more objects (113, 115) in reaction to determining that the environment does not hold an object (113, 115) with an anomalous configuration.

9. A data processing system, configured to perform a method of any one of claims 1 to 8.

10. A computer program comprising instructions which, when executed by a computer, makes the computer perform a method according to any one of claims 1 to 8.

11. A computer-readable medium comprising instructions which, when executed by a computer, makes the computer perform a method according to any one of claims 1 to 8.
